(19) Europäisches Patentamt
European Patent Office
Office européen des brevets

(11) **EP 2 550 304 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**19.09.2018   Patentblatt 2018/38**

(45) Hinweis auf die Patenterteilung:
**13.05.2015   Patentblatt 2015/20**

(21) Anmeldenummer: **11709140.5**

(22) Anmeldetag: **22.03.2011**

(51) Int Cl.:
**C08F 2/00** $^{(2006.01)}$       **A61L 15/60** $^{(2006.01)}$

(86) Internationale Anmeldenummer:
**PCT/EP2011/054289**

(87) Internationale Veröffentlichungsnummer:
**WO 2011/117215 (29.09.2011 Gazette 2011/39)**

(54) **VERFAHREN ZUR ENTFERNUNG VON RESTMONOMEREN AUS WASSERABSORBIERENDEN POLYMERPARTIKELN**

METHOD FOR REMOVING RESIDUAL MONOMERS FROM WATER-ABSORBENT POLYMER PARTICLES

PROCÉDÉ POUR ÉLIMINER DES MONOMÈRES RÉSIDUELS DE PARTICULES POLYMÈRES ABSORBANT L'EAU

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.03.2010   EP 10157574**

(43) Veröffentlichungstag der Anmeldung:
**30.01.2013   Patentblatt 2013/05**

(73) Patentinhaber: **BASF SE**
**67056 Ludwigshafen am Rhein (DE)**

(72) Erfinder:
• **WENGELER, Robert**
**76199 Karlsruhe (DE)**
• **FLORE, Karin**
**67592 Flörsheim-Dalsheim (DE)**

(74) Vertreter: **BASF IP Association**
**BASF SE**
**G-FLP-C006**
**67056 Ludwigshafen (DE)**

(56) Entgegenhaltungen:
**EP-A1- 1 191 051        EP-A2- 0 289 338**
**WO-A1-2008/095901   WO-A1-2008/095901**
**WO-A1-2010/018143**

EP 2 550 304 B2

**Beschreibung**

Die vorliegende Erfindung betrifft ein Verfahren zur Entfernung von Restmonomeren aus wasserabsorbierenden Polymerpartikeln, wobei die wasserabsorbierenden Polymerpartikel in einem Mischer mit rotierenden Mischwerkzeugen bei einer Temperatur von mindestens 60°C in Gegenwart von Wasserdampf thermisch nachbehandelt werden.

Die Herstellung wasserabsorbierender Polymerpartikel wird in der Monographie "Modern Superabsorbent Polymer Technology", F.L. Buchholz und A.T. Graham, Wiley-VCH, 1998, Seiten 71 bis 103, beschrieben.

Wasserabsorbierende Polymere werden als wässrige Lösungen absorbierende Produkte zur Herstellung von Windeln, Tampons, Damenbinden und anderen Hygieneartikeln, aber auch als wasserzurückhaltende Mittel im landwirtschaftlichen Gartenbau verwendet. Wasserabsorbierende Polymere werden auch als "superabsorbent polymers" bzw. "Superabsorber" bezeichnet.

Durch Sprühpolymerisation können die Verfahrensschritte Polymerisation und Trocknung zusammengefasst werden. Zusätzlich kann die Partikelgröße durch geeignete Verfahrensführung in gewissen Grenzen eingestellt werden.

Die Herstellung wasserabsorbierender Polymerpartikel durch Sprühpolymerisation wird beispielsweise in EP 0 348 180 A1, EP 0 816 383 A1, WO 96/40427 A1, US 4,020,256, US 2002/0193546 und DE 35 19 013 A1 beschrieben.

WO 2008/095901 A1 beschreibt ein Verfahren zur Entfernung von Restmonomeren durch thermische Nachbehandlung mit Wasserdampf im fluidisierten Zustand.

Aufgabe der vorliegenden Erfindung war die Bereitstellung eines verbesserten Verfahrens zur Entfernung von Restmonomeren aus wasserabsorbierenden Polymerpartikeln.

Insbesondere war es eine Aufgabe der vorliegenden Erfindung ein besonders kostengünstiges Verfahren bereitzustellen.

Gelöst wurde die Aufgabe durch ein Verfahren zur Entfernung von Restmonomeren aus wasserabsorbierenden Polymerpartikeln, dadurch gekennzeichnet, dass die wasserabsorbierenden Polymerpartikel in einem Mischer mit rotierenden Mischwerkzeugen in Gegenwart eines Gasstromes thermisch nachbehandelt werden, das anströmende Gas bereits Wasserdampf enthält, die mittlere Verweilzeit im Mischer von 10 bis 120 Minuten beträgt, die wasserabsorbierenden Polymerpartikel während der thermischen Nachbehandlung eine Temperatur von mindestens 60°C und einen Wassergehalt von mindestens 3 Gew.-% aufweisen und der Gasstrom 0,01 bis 1 kg Wasserdampf pro kg trockenes Gas enthält.

Die Temperatur der wasserabsorbierenden Polymerpartikel beträgt während der thermischen Nachbehandlung beträgt vorzugsweise von 60 bis 140°C, besonders bevorzugt von 70 bis 125°C, ganz besonders von 80 bis 110°C.

Der Wassergehalt der wasserabsorbierenden Polymerpartikel beträgt während der thermischen Nachbehandlung vorzugsweise von 3 bis 50 Gew.-%, besonders bevorzugt von 6 bis 30 Gew.-%, ganz besonders bevorzugt von 8 bis 20 Gew.-%.

Der Gasstrom enthält Wasserdampf, vorzugsweise von 0,05 bis 0,5 kg pro kg trockenes Gas, besonders bevorzugt von 0,1 bis 0,25 g kg pro kg trockenes Gas.

Die mittlere Verweilzeit im Mischer während der thermischen Nachbehandlung beträgt vorzugsweise von 15 bis 90 Minuten, besonders bevorzugt von 20 bis 60 Minuten.

Das zur thermischen Nachbehandlung eingesetzte Gasvolumen beträgt in einem diskontinuierlichen Mischer vorzugsweise von 0,01 bis 5 $Nm^3$/h, besonders bevorzugt von 0,05 bis 2 $Nm^3$/h, ganz besonders bevorzugt von 0,1 bis 0,5 $Nm^3$/h, jeweils pro kg wasserabsorbierende Polymerpartikel und in einem kontinuierlichen Mischer vorzugsweise von 0,01 bis 5 $Nm^3$/h, besonders bevorzugt von 0,05 bis 2 $Nm^3$/h, ganz besonders bevorzugt von 0,1 bis 0,5 $Nm^3$/h, jeweils pro kg/h durchgesetzter wasserabsorbierender Polymerpartikel. Das Gasvolumen ist hierbei das auf Standardbedingungen (0°C; 1.013,25 hPa) korrigierte Gasvolumen.

Die übrigen Bestandteile des Gases sind vorzugsweise Stickstoff, Kohlendioxid, Argon, Xenon, Krypton, Neon, Helium, Luft oder Luft/Stickstoff-Gemische, besonders bevorzugt Stickstoff oder Luft/Stickstoff-Gemische mit weniger als 10 Vol.-% Sauerstoff.

Die Anwesenheit von Sauerstoff kann zu Verfärbungen der wasserabsorbierenden Polymerpartikel führen. Luft ist dagegen besonders kostengünstig.

Im erfindungsgemäßen Verfahren können alle dem Fachmann bekannten diskontinuierlichen und kontinuierlichen Mischer mit rotierenden Mischwerkzeugen, wie Schneckenmischer, Scheibenmischer, Schraubenbandmischer und Schaufelmischer eingesetzt werden. Geeignete Mischer sind beispielsweise Becker Shovel Mixer (Gebr. Lödige Maschinenbau GmbH; Paderborn; DE), Nara Paddle Mixer (NARA Machinery Europe; Frechen; DE), Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Ruberg Durchlaufmischer (Ruberg GmbH & Co KG; Nieheim; DE). Im erfindungsgemäßen Verfahren werden vorzugsweise Becker Shovel Mixer, Pflugschar® Mischer und Ruberg Durchlaufmischer zur thermischen Nachbehandlung verwendet.

Mischer mit rotierenden Mischwerkzeugen werden gemäß der Lage der Rotationsachse in Vertikalmischer und Horizontalmischer unterteilt. Vorteilhaft werden für das erfindungsgemäße Verfahren Horizontalmischer verwendet.

Horizontalmischer im Sinne dieser Erfindung sind Mischer mit rotierenden Mischwerkzeugen deren Lage der Rotationsachse zur Produktstromrichtung um weniger als 20°, vorzugsweise um weniger als 15°, besonders bevorzugt um weniger als 10°, ganz besonders bevorzugt um weniger als 5°, von der Horizontalen abweicht.

Für Mischer mit horizontal gelagertem Mischwerkzeugen ist die Froude-Zahl wie folgt definiert:

$$Fr = \frac{\omega^2 r}{g}$$

mit

r:      Radius des Mischwerkzeugs

ω:     Kreisfrequenz

g:      Erdbeschleunigung

Die Froude-Zahl beträgt vorzugsweise von 0,1 bis 6, besonders bevorzugt von 0,15 bis 3, ganz besonders bevorzugt von 0,2 bis 1.

Die Innenwand des Mischers weist gegenüber Wasser einen Randwinkel von vorzugsweise weniger als 70°, besonders bevorzugt von weniger als 60°, ganz besonders bevorzugt von weniger als 50°, auf. Der Randwinkel ist ein Maß für das Benetzungsverhalten und wird gemäß DIN 53900 gemessen.

Vorteilhaft werden im erfindungsgemäßen Verfahren Mischer eingesetzt, deren produktberührte Innenwand aus einem nichtrostenden Stahl ist. Nichtrostende Stähle weisen üblicherweise einen Chromgehalt von 10,5 bis 13 Gew.-% Chrom auf. Der hohe Chromanteil führt zu einer schützenden Passivierung aus Chromdioxid an der Stahloberfläche. Weitere Legierungsbestandteile erhöhen die Korrosionsbeständigkeit und verbessern die mechanischen Eigenschaften.

Besonders geeignete Stähle sind austenitische Stähle mit beispielsweise mindestens 0,08 Gew.-% Kohlenstoff. Vorteilhaft enthalten die austenitischen Stähle neben Eisen, Kohlenstoff, Chrom, Nickel und optional Molybdän noch weitere Legierungsbestandteile, vorzugsweise Niob oder Titan.

Die bevorzugten nichtrostenden Stähle sind Stähle mit der Werkstoffnummer 1.43xx oder 1.45xx gemäß der DIN EN 10020, wobei xx eine natürliche Zahl zwischen 0 und 99 sein kann. Besonders bevorzugte Werkstoffe sind die Stähle mit den Werkstoffnummern 1.4301, 1.4541 und 1.4571, insbesondere Stahl mit der Werkstoffnummer 1.4301.

Vorteilhaft ist die produktberührte Innenwand des Mischers poliert. Polierte nichtrostende Stahloberflächen weisen eine niedrigere Rauhigkeit und einen niedrigeren Randwinkel gegenüber Wasser auf als matte oder aufgeraute Stahloberflächen.

Der vorliegenden Erfindung liegt die Erkenntnis zugrunde, dass sich Restmonomere aus wasserabsorbierenden Polymerpartikeln durch Kontakt mit einem strömenden Gas in einem Mischer mit rotierenden Mischwerkzeugen besonders wirksam entfernen lassen. Durch Verwendung von Mischern mit rotierenden Mischwerkzeugen kann die Gasmenge und insbesondere der Wasserdampfanteil bei gleicher Wirksamkeit der thermischen Nachbehandlung deutlich gesenkt werden.

Wichtig ist hierbei, dass die Polymerpartikel nicht zu trocken sind. Bei zu trockenen Partikeln nehmen die Restmonomeren nur unwesentlich ab. Ein zu hoher Wassergehalt erhöht die Verbackungsneigung der Polymerpartikel. Damit die wasserabsorbierenden Polymerpartikel während der thermischen Nachbehandlung nicht zu schnell trocknen muss das anströmende Gas bereits Wasserdampf enthalten.

Im Folgenden wird die Herstellung der wasserabsorbierenden Polymerpartikel beschrieben:
Die wasserabsorbierenden Polymerpartikel werden beispielsweise durch Polymerisation einer Monomerlösung, enthaltend

1. a) mindestens ein ethylenisch ungesättigtes, säuregruppentragendes Monomer, das zumindest teilweise neutralisiert sein kann,
2. b) mindestens einen Vernetzer,
3. c) mindestens einen Initiator
4. d) optional ein oder mehrere mit den unter a) genannten Monomeren copolymerisierbare ethylenisch ungesättigte Monomere,
5. e) optional ein oder mehrere wasserlösliche Polymere und

hergestellt und sind üblicherweise wasserunlöslich.

Die Monomeren a) sind vorzugsweise wasserlöslich, d.h. die Löslichkeit in Wasser bei 23°C beträgt typischerweise mindestens 1 g/100 g Wasser, vorzugsweise mindestens 5 g/100 g Wasser, besonders bevorzugt mindestens 25 g/100 g Wasser, ganz besonders bevorzugt mindestens 35 g/100 g Wasser.

Geeignete Monomere a) sind beispielsweise ethylenisch ungesättigte Carbonsäuren, wie Acrylsäure, Methacrylsäure, und Itaconsäure. Besonders bevorzugte Monomere sind Acrylsäure und Methacrylsäure. Ganz besonders bevorzugt ist Acrylsäure.

Weitere geeignete Monomere a) sind beispielsweise ethylenisch ungesättigte Sulfonsäuren, wie Styrolsulfonsäure und 2-Acrylamido-2-methylpropansulfonsäure (AMPS).

Verunreinigungen können einen erheblichen Einfluss auf die Polymerisation haben. Daher sollten die eingesetzten Rohstoffe eine möglichst hohe Reinheit aufweisen. Es ist daher oft vorteilhaft die Monomeren a) speziell zu reinigen. Geeignete Reinigungsverfahren werden beispielsweise in der WO 2002/055469 A1, der WO 2003/078378 A1 und der WO 2004/035514 A1 beschrieben. Ein geeignetes Monomer a) ist beispielsweise eine gemäß WO 2004/035514 A1 gereinigte Acrylsäure mit 99,8460 Gew.-% Acrylsäure, 0,0950 Gew.-% Essigsäure, 0,0332 Gew.-% Wasser, 0,0203 Gew.-% Propionsäure, 0,0001 Gew.-% Furfurale, 0,0001 Gew.-% Maleinsäureanhydrid, 0,0003 Gew.-% Diacrylsäure und 0,0050 Gew.-% Hydrochinonmonomethylether.

Der Anteil an Acrylsäure und/oder deren Salzen an der Gesamtmenge der Monomeren a) beträgt vorzugsweise mindestens 50 mol-%, besonders bevorzugt mindestens 90 mol-%, ganz besonders bevorzugt mindestens 95 mol-%.

Die Säuregruppen der Monomere a) sind üblicherweise teilweise neutralisiert, vorzugsweise zu mindestens 25 mol-%, bevorzugt zu 50 bis 80 mol-%, besonders bevorzugt 60 bis 75 mol-%, ganz besonders bevorzugt 65 bis 72 mol%, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium sind als Alkalimetalle besonders bevorzugt, ganz besonders bevorzugt sind jedoch Natriumhydroxid, Natriumcarbonat oder Natriumhydrogencarbonat sowie deren Mischungen. Üblicherweise wird die Neutralisation durch Einmischung des Neutralisationsmittels als wässrige Lösung, als Schmelze, oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Optional können der Monomerlösung oder ihren Ausgangsstoffen ein oder mehrere Chelatbildner zur Maskierung von Metallionen, wie beispielsweise Eisen, zwecks Stabilisierung zugesetzt werden. Geeignete Chelatbildner sind beispielsweise Alkalicitrate, Zitronensäure, Alkalitartrate, Pentanatriumtriphosphat, Ethylendiamintetraazetat, Nitrilotriessigsäure, sowie alle unter dem Namen Trilon® bekannten Chelatbildner, wie beispielsweise Trilon® C (Pentanatriumdiethylentriaminpentaazetat), Trilon® D (Trinatrium-(hydroxyethyl)-ethylen-diamintriazetat), sowie Trilon® M (Methylglycindiessigsäure).

Die Monomere a) enthalten üblicherweise Polymerisationsinhibitoren, vorzugsweise Hydrochinonhalbether, als Lagerstabilisator.

Die Monomerlösung enthält vorzugsweise bis zu 250 Gew.-ppm, bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf das unneutralisierte Monomer a). Beispielsweise kann zur Herstellung der Monomerlösung ein ethylenisch ungesättigtes, säuregruppentragendes Monomer mit einem entsprechenden Gehalt an Hydrochinonhalbether verwendet werden.

Bevorzugte Hydrochinonhalbether sind Hydrochinonmonomethylether (MEHQ) und/oder alpha-Tocopherol (Vitamin E).

Geeignete Vernetzer b) sind Verbindungen mit mindestens zwei zur Vernetzung geeigneten Gruppen. Derartige Gruppen sind beispielsweise ethylenisch ungesättigte Gruppen, die in die Polymerkette radikalisch einpolymerisiert werden können, und funktionelle Gruppen, die mit den Säuregruppen des Monomeren a) kovalente Bindungen ausbilden können. Weiterhin sind auch polyvalente Metallsalze, die mit mindestens zwei Säuregruppen des Monomeren a) koordinative Bindungen ausbilden können, als Vernetzer b) geeignet.

Vernetzer b) sind vorzugsweise Verbindungen mit mindestens zwei polymerisierbaren Gruppen, die in das Polymernetzwerk radikalisch einpolymerisiert werden können. Geeignete Vernetzer b) sind beispielsweise Ethylenglykoldimethacrylat, Diethylenglykoldiacrylat, Polyethylenglykoldiacrylat, Allylmethacrylat, Trimethylolpropantriacrylat, Triallylamin, Tetraallylammoniumchlorid, Tetraallyloxyethan, wie in EP 0 530 438 A1 beschrieben, Di- und Triacrylate, wie in EP 0 547 847 A1, EP 0 559 476 A1, EP 0 632 068 A1, WO 93/21237 A1, WO 2003/104299 A1, WO 2003/104300 A1, WO 2003/104301 A1 und DE 103 31 450 A1 beschrieben, gemischte Acrylate, die neben Acrylatgruppen weitere ethylenisch ungesättigte Gruppen enthalten, wie in DE 103 31 456 A1 und DE 103 55 401 A1 beschrieben, oder Vernetzermischungen, wie beispielsweise in DE 195 43 368 A1, DE 196 46 484 A1, WO 90/15830 A1 und WO 2002/032962 A2 beschrieben.

Bevorzugte Vernetzer b) sind Pentaerythrittriallylether, Tetraallyloxyethan, Methylenbismethacrylamid, 15-fach ethoxiliertes Trimethylolpropantriacrylat, Polyethylenglykoldiacrylat, Trimethylolpropantriacrylat und Triallylamin.

Ganz besonders bevorzugte Vernetzer b) sind die mit Acrylsäure oder Methacrylsäure zu Di- oder Triacrylaten veresterten mehrfach ethoxylierten und/oder propoxylierten Glyzerine, wie sie beispielsweise in WO 2003/104301 A1 beschrieben sind. Besonders vorteilhaft sind Di- und/oder Triacrylate des 3- bis 10-fach ethoxylierten Glyzerins. Ganz besonders bevorzugt sind Di- oder Triacrylate des 1- bis 5-fach ethoxylierten und/oder propoxylierten Glyzerins. Am meisten bevorzugt sind die Triacrylate des 3- bis 5-fach ethoxylierten und/oder propoxylierten Glyzerins, insbesondere das Triacrylat des 3-fach ethoxylierten Glyzerins.

Die Menge an Vernetzer b) beträgt vorzugsweise 0,05 bis 1,5 Gew.-%, besonders bevorzugt 0,1 bis 1 Gew.-%, ganz besonders bevorzugt 0,3 bis 0,6 Gew.-%, jeweils bezogen auf Monomer a). Mit steigendem Vernetzergehalt sinkt die Zentrifugenretentions-kapazität (CRC) und die Absorption unter einem Druck von 21,0 g/cm$^2$ (AUL0.3psi) durchläuft ein Maximum.

Als Initiatoren c) können sämtliche unter den Polymerisationsbedingungen in Radikale erzeugende Verbindungen eingesetzt werden, beispielsweise thermische Initiatoren, Redox-Initiatoren, Photoinitiatoren. Geeignete Redox-Initiatoren sind Natriumperoxodisulfat/Ascorbinsäure, Wasserstoffperoxid/Ascorbinsäure, Natriumperoxodisulfat/Natriumbisulfit und Wasserstoffperoxid/Natriumbisulfit. Vorzugsweise werden Mischungen aus thermischen Initiatoren und Redox-Initiatoren eingesetzt, wie Natriumperoxodisulfat/Wasserstoffperoxid/Ascorbinsäure. Als reduzierende Komponente wird aber vorzugsweise ein Gemisch aus dem Natriumsalz der 2-Hydroxy-2-sulfinatoessigsäure, dem Dinatriumsalz der 2-Hydroxy-2-sulfonatoessigsäure und Natriumbisulfit eingesetzt. Derartige Gemische sind als Brüggolite® FF6 und Brüggolite® FF7 (Brüggemann Chemicals; Heilbronn; DE) erhältlich.

Mit den ethylenisch ungesättigten, säuregruppentragenden Monomeren a) copolymerisierbare ethylenisch ungesättigte Monomere d) sind beispielsweise Acrylamid, Methacrylamid, Hydroxyethylacrylat, Hydroxyethylmethacrylat, Dimethylaminoethylmethacrylat, Dimethylaminoethylacrylat, Dimethylaminopropylacrylat, Diethylaminopropylacrylat, Dimethylaminoethylmethacrylat und Diethylaminoethylmethacrylat.

Als wasserlösliche Polymere e) können Polyvinylalkohol, Polyvinylpyrrolidon, Stärke, Stärkederivate, modifizierte Cellulose, wie Methylcellulose oder Hydroxyethylcellulose, Gelatine, Polyglykole oder Polyacrylsäuren, vorzugsweise Stärke, Stärkederivate und modifizierte Cellulose, eingesetzt werden.

Üblicherweise wird eine wässrige Monomerlösung verwendet. Der Wassergehalt der Monomerlösung beträgt vorzugsweise von 40 bis 75 Gew.-%, besonders bevorzugt von 45 bis 70 Gew.-%, ganz besonders bevorzugt von 50 bis 65 Gew.-%. Es ist auch möglich Monomersuspensionen, d.h. Monomerlösungen mit überschüssigem Monomer a), beispielsweise Natriumacrylat, einzusetzen. Mit steigendem Wassergehalt steigt der Energieaufwand bei der anschließenden Trocknung und mit sinkendem Wassergehalt kann die Polymerisationswärme nur noch ungenügend abgeführt werden.

Die bevorzugten Polymerisationsinhibitoren benötigen für eine optimale Wirkung gelösten Sauerstoff. Daher kann die Monomerlösung vor der Polymerisation durch Inertisierung, d.h. Durchströmen mit einem inerten Gas, vorzugsweise Stickstoff oder Kohlendioxid, von gelöstem Sauerstoff befreit werden. Vorzugsweise wird der Sauerstoffgehalt der Monomerlösung vor der Polymerisation auf weniger als 1 Gew.-ppm, besonders bevorzugt auf weniger als 0,5 Gew.-ppm, ganz besonders bevorzugt auf weniger als 0,1 Gew.-ppm, gesenkt.

Geeignete Reaktoren sind beispielsweise Knetreaktoren oder Bandreaktoren (Gelpolymerisation). Im Kneter wird das bei der Polymerisation einer wässrigen Monomerlösung entstehende Polymergel durch beispielsweise gegenläufige Rührwellen kontinuierlich zerkleinert, wie in WO 2001/038402 A1 beschrieben. Die Polymerisation auf dem Band wird beispielsweise in DE 38 25 366 A1 und US 6,241,928 beschrieben. Bei der Polymerisation in einem Bandreaktor entsteht ein Polymergel, das in einem weiteren Verfahrensschritt zerkleinert werden muss, beispielsweise in einem Extruder oder Kneter.

Bei Verwendung von Knetreaktoren oder Bandreaktoren ist es möglich die Neutralisation nach der Polymerisation auf der Stufe des bei der Polymerisation entstehenden Polymergels durchzuführen. Weiterhin ist es möglich bis zu 40 mol-%, vorzugsweise 10 bis 30 mol-%, besonders bevorzugt 15 bis 25 mol-%, der Säuregruppen vor der Polymerisation zu neutralisieren indem ein Teil des Neutralisationsmittels bereits der Monomerlösung zugesetzt und der gewünschte Endneutralisationsgrad erst nach der Polymerisation auf der Stufe des Polymergels eingestellt wird. Wird das Polymergel zumindest teilweise nach der Polymerisation neutralisiert, so wird das Polymergel vorzugsweise mechanisch zerkleinert, beispielsweise mittels eines Extruders, wobei das Neutralisationsmittel aufgesprüht, übergestreut oder aufgegossen und dann sorgfältig untergemischt werden kann. Dazu kann die erhaltene Gelmasse noch mehrmals zur Homogenisierung extrudiert werden.

Das erhaltene Polymergel wird vorzugsweise mit einem Bandtrockner getrocknet bis der Restfeuchtegehalt vorzugsweise 0,5 bis 15 Gew.-%, besonders bevorzugt 1 bis 10 Gew.-%, ganz besonders bevorzugt 2 bis 8 Gew.-%, beträgt, wobei der Restfeuchtegehalt gemäß der von der EDANA empfohlenen Testmethode Nr. WSP 230.2-05 "Moisture Content" bestimmt wird. Bei einer zu hohen Restfeuchte weist das getrocknete Polymergel eine zu niedrige Glasübergangstemperatur $T_g$ auf und ist nur schwierig weiter zu verarbeiten. Bei einer zu niedrigen Restfeuchte ist das getrocknete Polymergel zu spröde und in den anschließenden Zerkleinerungsschritten fallen unerwünscht große Mengen an Polymerpartikeln mit zu niedriger Partikelgröße ("fines") an. Der Feststoffgehalt des Gels beträgt vor der Trocknung vorzugsweise von 25 und 90 Gew.-%, besonders bevorzugt von 35 bis 70 Gew.-%, ganz besonders bevorzugt von 40 bis 60 Gew.-%. Wahlweise kann zur Trocknung aber auch ein Wirbelbetttrockner oder ein Schaufeltrockner verwendet werden.

Das getrocknete Polymergel wird hiernach gemahlen und klassiert, wobei zur Mahlung üblicherweise ein- oder mehrstufige Walzenstühle, bevorzugt zwei- oder dreistufige Walzenstühle, Stiftmühlen, Hammermühlen oder Schwingmühlen, eingesetzt werden können.

Die mittlere Partikelgröße der als Produktfraktion abgetrennten Polymerpartikel beträgt vorzugsweise mindestens 200 μm, besonders bevorzugt von 250 bis 600 μm, ganz besonders von 300 bis 500 μm. Die mittlere Partikelgröße der Produktfraktion kann mittels der von der EDANA empfohlenen Testmethode Nr. WSP 220.2-05 "Partikel Size Distribution" ermittelt werden, wobei die Massenanteile der Siebfraktionen kumuliert aufgetragen werden und die mittlere Partikelgröße graphisch bestimmt wird. Die mittlere Partikelgröße ist hierbei der Wert der Maschenweite, der sich für kumulierte 50 Gew.-% ergibt.

Der Anteil an Partikeln mit einer Partikelgröße von mindestens 150 μm beträgt vorzugsweise mindestens 90 Gew.-%, besonders bevorzugt mindesten 95 Gew.-%, ganz besonders bevorzugt mindestens 98 Gew.-%.

Polymerpartikel mit zu niedriger Partikelgröße senken die Permeabilität (SFC). Daher sollte der Anteil zu kleiner Polymerpartikel ("fines") niedrig sein.

Zu kleine Polymerpartikel werden daher üblicherweise abgetrennt und in das Verfahren rückgeführt. Die geschieht vorzugsweise vor, während oder unmittelbar nach der Polymerisation, d.h. vor der Trocknung des Polymergels. Die zu kleinen Polymerpartikel können vor oder während der Rückführung mit Wasser und/oder wässrigem Tensid angefeuchtet werden.

Es ist auch möglich in späteren Verfahrensschritten zu kleine Polymerpartikel abzutrennen, beispielsweise nach der Oberflächennachvernetzung oder einem anderen Beschichtungsschritt. In diesem Fall sind die rückgeführten zu kleinen Polymerpartikel oberflächennachvernetzt bzw. anderweitig beschichtet, beispielsweise mit pyrogener Kieselsäure.

Wird zur Polymerisation ein Knetreaktor verwendet, so werden die zu kleinen Polymerpartikel vorzugsweise während des letzten Drittels der Polymerisation zugesetzt.

Werden die zu kleinen Polymerpartikel sehr früh zugesetzt, beispielsweise bereits zur Monomerlösung, so wird dadurch die Zentrifugenretentionskapazität (CRC) der erhaltenen wasserabsorbierenden Polymerpartikel gesenkt. Dies kann aber beispielsweise durch Anpassung der Einsatzmenge an Vernetzer b) kompensiert werden.

Werden die zu kleinen Polymerpartikel sehr spät zugesetzt, beispielsweise erst in einem dem Polymerisationsreaktor nachgeschalteten Apparat, beispielsweise einem Extruder, so lassen sich die zu kleinen Polymerpartikel nur noch schwer in das erhaltene Polymergel einarbeiten. Unzureichend eingearbeitete zu kleine Polymerpartikel lösen sich aber während der Mahlung wieder von dem getrockneten Polymergel, werden beim Klassieren daher erneut abgetrennt und erhöhen die Menge rückzuführender zu kleiner Polymerpartikel.

Der Anteil an Partikeln mit einer Partikelgröße von höchstens 850 μm, beträgt vorzugsweise mindestens 90 Gew.-%, besonders bevorzugt mindestens 95 Gew.-%, ganz besonders bevorzugt mindestens 98 Gew.-%.

Polymerpartikel mit zu großer Partikelgröße senken die Anquellgeschwindigkeit. Daher sollte der Anteil zu großer Polymerpartikel ebenfalls niedrig sein.

Zu große Polymerpartikel werden daher üblicherweise abgetrennt und in die Mahlung des getrockneten Polymergels rückgeführt.

Es ist aber auch möglich eine wässrige Monomerlösung zu vertropfen und die erzeugten Tropfen in einem erwärmten Trägergasstrom zu polymerisieren. Hierbei können die Verfahrensschritte Polymerisation und Trocknung zusammengefasst werden, wie in WO 2008/040715 A2 und WO 2008/052971 A1 beschrieben.

Die Monomerlösung wird hierzu mittels mindestens einer Bohrung unter Ausbildung von Tropfen in den Reaktionsraum dosiert. Die Bohrungen können sich beispielsweise in einer Vertropferplatte befinden.

Eine Vertropferplatte ist eine Platte mit mindestens einer Bohrung, wobei die Flüssigkeit von oben durch die Bohrung tritt. Die Vertropferplatte bzw. die Flüssigkeit kann in Schwingungen versetzt werden, wodurch an der Unterseite der Vertropferplatte je Bohrung eine idealerweise monodisperse Tropfenkette erzeugt wird. In einer bevorzugten Ausführungsform wird die Vertropferplatte nicht angeregt.

Die Anzahl und die Größe der Bohrungen werden gemäß der gewünschten Kapazität und Tropfengröße ausgewählt. Der Tropfendurchmesser beträgt dabei üblicherweise das 1,9-fache des Durchmessers der Bohrung. Wichtig ist hierbei, dass die zu vertropfende Flüssigkeit nicht zu schnell durch die Bohrung tritt bzw. der Druckverlust über die Bohrung nicht zu groß ist. Ansonsten wird die Flüssigkeit nicht vertropft, sondern der Flüssigkeitsstrahl wird infolge der hohen kinetischen Energie zerrissen (versprüht). Die Reynoldszahl bezogen auf den Durchsatz pro Bohrung und den Bohrungsdurchmesser ist vorzugsweise kleiner als 2.000, bevorzugt kleiner 1.600, besonders bevorzugt kleiner 1.400, ganz besonders bevorzugt kleiner 1.200.

Die Unterseite der Vertropferplatte weist gegenüber Wasser einen Kontaktwinlel (Randwinkel) von vorzugsweise mindestens 60°, besonders bevorzugt mindestens 75°, ganz besonders bevorzugt mindestens 90°, auf.

Der Kontaktwinkel ist ein Maß für das Benetzungsverhalten von Wasser, gegenüber einer Oberfläche und kann mit üblichen Methoden bestimmt werden, beispielsweise gemäß ASTM D 5725. Ein niedriger Kontaktwinkel bedeutet eine gute und ein hoher Kontaktwinkel eine schlechte Benetzung.

Es ist aber auch möglich, dass die Vertropferplatte aus einem Material mit einem niedrigeren Kontaktwinkel gegenüber Wasser besteht, beispielsweise einem Stahl mit der Werkstoffnummer 1.4571, und mit einem Material mit einem größeren Kontaktwinkel gegenüber Wasser beschichtet wird.

Geeignete Beschichtungen sind beispielsweise fluorhaltige Polymere, wie Perfluoralkoxyethylen, Polytetrafluorethylen, Ethylen-Chlortrifluorethylen-Copolymere, EthylenTetrafluorethylen-Copolymere und fluoriertes Polyethylen.

Die Beschichtungen können auch als Dispersion aufgebracht werden, wobei das Dispergiermittel bei der anschließenden Erwärmung verdampft. Ein derartiges Verfahren wird beispielsweise in US 3,243,321 beschrieben.

Weitere Beschichtungsverfahren sind unter dem Stichwort "Thin Films" in der elektronischen Version von "Ullmann's Encyclopedia of Industrial Chemistry" zu finden.

Die Beschichtung kann aber auch eine durch chemische Vernickelung hergestellte Nickelschicht sein.

Infolge der schlechten Benetzbarkeit der Vertropferplatte werden monodisperse Tropfen mit enger Tropfengrößenverteilung erhalten.

Die Vertropferplatte weist vorzugsweise mindestens 5, besonders bevorzugt mindestens 25, ganz besonders bevorzugt mindestens 50, und vorzugsweise bis zu 750, besonders bevorzugt bis zu 500, ganz besonders bevorzugt bis zu 250, Bohrungen auf. Der Durchmesser der Bohrungen wird entsprechend der gewünschten Tropfengröße ausgewählt.

Der Durchmesser der Bohrungen beträgt vorzugsweise von 50 bis 500 $\mu$m, besonders bevorzugt von 100 bis 300 $\mu$m, ganz besonders bevorzugt von 150 bis 250 $\mu$m.

Die Temperatur der Monomerlösung beim Durchtritt durch die Bohrungen beträgt vorzugsweise von 5 bis 80°C, besonders bevorzugt von 10 bis 70°C, ganz besonders bevorzugt von 30 bis 60°C.

Der Abstand der Bohrungen beträgt vorzugsweise 10 bis 50 mm, besonders bevorzugt 12 bis 40 mm, ganz besonders bevorzugt 15 bis 30 mm. Zu geringe Abstände führen zur Bildung von Agglomeraten.

Der Polymerisationsreaktor wird von einem Trägergas durchströmt. Dabei kann das Trägergas im Gleichstrom oder im Gegenstrom zu den frei fallenden Tropfen der Monomerlösung durch den Reaktionsraum geführt werden, bevorzugt im Gleichstrom, d.h. von unten nach oben. Vorzugsweise wird das Trägergas nach einem Durchgang zumindest teilweise, bevorzugt zu mindestens 50%, besonders bevorzugt zu mindestens 75%, als Kreisgas in den Reaktionsraum zurückgeführt. Üblicherweise wird eine Teilmenge des Trägergases nach jedem Durchgang ausgeschleust, vorzugsweise bis zu 10%, besonders bevorzugt bis zu 3%, ganz besonders bevorzugt bis zu 1%.

Der Sauerstoffgehalt des Trägergases beträgt vorzugsweise von 0,5 bis 15 Vol.-%, besonders bevorzugt von 1 bis 10 Vol.-%, ganz besonders bevorzugt von 2 bis 7 Gew.-%.

Das Trägergas enthält neben Sauerstoff vorzugsweise Stickstoff. Der Stickstoffgehalt des Trägergases beträgt vorzugsweise mindestens 80 Vol.-%, besonders bevorzugt mindesten 90 Vol.-%, ganz besonders bevorzugt mindestens 95 Vol.-%. Weitere geeignete Trägergase sind Kohlendioxid, Argon, Xenon, Krypton, Neon und Helium. Es können auch Gasmischungen verwendet werden. Das Trägergas kann auch mit Wasserdampf und/oder Acrylsäuredämpfen beladen werden.

Die Gasgeschwindigkeit wird vorzugsweise so eingestellt, dass die Strömung im Polymerisationsreaktor gerichtet ist, beispielsweise liegen keine der allgemeinen Strömungsrichtung entgegen gesetzte Konvektionswirbel vor, und beträgt üblicherweise 0,1 bis 2,5 m/s, vorzugsweise 0,3 bis 1,5 m/s bevorzugt von 0,5 bis 1,2 m/s, besonders bevorzugt 0,6 bis 1,0 m/s, ganz besonders bevorzugt 0,7 bis 0,9 m/s.

Das den Reaktor durchströmende Trägergas wird zweckmäßigerweise vor dem Reaktor auf die Reaktionstemperatur vorgewärmt.

Vorteilhaft wird die Gaseintrittstemperatur so geregelt, dass die Gasaustrittstemperatur, d.h. die Temperatur mit der das Trägergas den Reaktionsraum verlässt üblicherweise von 90 bis 150°C, vorzugsweise von 100 bis 140°C, bevorzugt von 105 bis 135°C, besonders bevorzugt von 110 bis 130°C, ganz besonders bevorzugt von 115 bis 125°C, beträgt.

Die Reaktion kann im Überdruck oder im Unterdruck durchgeführt werden, ein Unterdruck von bis zu 100 mbar gegenüber dem Umgebungsdruck ist bevorzugt.

Das Reaktionsabgas, d.h. das der Reaktionsraum verlassende Gas, kann beispielsweise in einem Wärmeaustauscher abgekühlt werden. Dabei kondensieren Wasser und nicht umgesetztes Monomer a). Danach kann das Reaktionsabgas zumindest teilweise wieder aufgewärmt und als Kreisgas in den Reaktor zurückgeführt werden. Ein Teil des Reaktionsabgases kann ausgeschleust und durch frisches Trägergas ersetzt werden, wobei im Reaktionsabgas enthaltenes Wasser und nicht umgesetzte Monomere a) abgetrennt und rückgeführt werden können.

Besonders bevorzugt ist ein Wärmeverbund, dass heißt, ein Teil der Abwärme beim Abkühlen des Abgases wird zum Aufwärmen des Kreisgases verwendet.

Die Reaktoren können begleitbeheizt werden. Die Begleitheizung wird dabei so eingestellt, dass die Wandtemperatur mindestens 5°C oberhalb der Reaktorinnentemperatur liegt und die Kondensation an den Reaktorwänden zuverlässig vermieden wird.

Das Reaktionsprodukt wird anschließend thermisch nachbehandelt und optional bis auf den gewünschten Wassergehalt getrocknet.

Die wasserabsorbierenden Polymerpartikel können zur weiteren Verbesserung der Eigenschaften oberflächennachvernetzt werden. Geeignete Oberflächennachvernetzer sind Verbindungen, die Gruppen enthalten, die mit mindestens zwei Carboxylatgruppen der Polymerpartikel kovalente Bindungen bilden können. Geeignete Verbindungen sind beispielsweise polyfunktionelle Amine, polyfunktionelle Amidoamine, polyfunktionelle Epoxide, wie in EP 0 083 022 A2, EP 0 543 303 A1 und EP 0 937 736 A2 beschrieben, di- oder polyfunktionelle Alkohole, wie in DE 33 14 019 A1, DE 35 23 617 A1 und EP 0 450 922 A2 beschrieben, oder ß-Hydroxyalkylamide, wie in DE 102 04 938 A1 und US 6,239,230 beschrieben.

Des weiteren sind in DE 40 20 780 C1 zyklische Karbonate, in DE 198 07 502 A1 2-Oxazolidinon und dessen Derivate, wie 2-Hydroxyethyl-2-oxazolidinon, in DE 198 07 992 C1 Bis- und Poly-2-oxazolidinone, in DE 198 54 573 A1 2-Oxotetrahydro-1,3-oxazin und dessen Derivate, in DE 198 54 574 A1 N-Acyl-2-Oxazolidinone, in DE 102 04 937 A1 zyklische Harnstoffe, in DE 103 34 584 A1 bizyklische Amidoacetale, in EP 1 199 327 A2 Oxetane und zyklische Harnstoffe und in WO 2003/031482 A1 Morpholin-2,3-dion und dessen Derivate als geeignete Oberflächennachvernetzer beschrieben.

Bevorzugte Oberflächennachvernetzer sind Ethylenkarbonat, Ethylenglykoldiglycidylether, Umsetzungsprodukte von Polyamiden mit Epichlorhydrin und Gemische aus Propylenglykol und 1,4-Butandiol.

Ganz besonders bevorzugte Oberflächennachvernetzer sind 2-Hydroxyethyl-2-oxazolidinon, 2-Oxazolidinon und 1,3-Propandiol.

Weiterhin können auch Oberflächennachvernetzer eingesetzt werden, die zusätzliche polymerisierbare ethylenisch ungesättigte Gruppen enthalten, wie in DE 37 13 601 A1 beschrieben

Die Menge an Oberflächennachvernetzer beträgt vorzugsweise 0,001 bis 2 Gew.-%, besonders bevorzugt 0,02 bis 1 Gew.-%, ganz besonders bevorzugt 0,05 bis 0,2 Gew.-%, jeweils bezogen auf die Polymerpartikel.

In einer bevorzugten Ausführungsform der vorliegenden Erfindung werden vor, während oder nach der Oberflächennachvernetzung zusätzlich zu den Oberflächennachvernetzern polyvalente Kationen auf die Partikeloberfläche aufgebracht.

Die im erfindungsgemäßen Verfahren einsetzbaren polyvalenten Kationen sind beispielsweise zweiwertige Kationen, wie die Kationen von Zink, Magnesium, Kalzium, Eisen und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat, Citrat und Lactat, möglich. Aluminiumsulfat und Aluminiumlaktat sind bevorzugt. Außer Metallsalzen können auch Polyamine als polyvalente Kationen eingesetzt werden.

Die Einsatzmenge an polyvalentem Kation beträgt beispielsweise 0,001 bis 1,5 Gew.-%, vorzugsweise 0,005 bis 1 Gew.-%, besonders bevorzugt 0,02 bis 0,8 Gew.-%. jeweils bezogen auf die Polymerpartikel.

Die Oberflächennachvernetzung wird üblicherweise so durchgeführt, dass eine Lösung des Oberflächennachvernetzers auf die getrockneten Polymerpartikel aufgesprüht wird. Im Anschluss an das Aufsprühen werden die mit Oberflächennachvernetzer beschichteten Polymerpartikel thermisch getrocknet, wobei die Oberflächennachvernetzungsreaktion sowohl vor als auch während der Trocknung stattfinden kann.

Das Aufsprühen einer Lösung des Oberflächennachvernetzers wird vorzugsweise in Mischern mit bewegten Mischwerkzeugen, wie Schneckenmischer, Scheibenmischer und Schaufelmischer, durchgeführt werden. Besonders bevorzugt sind Horizontalmischer, wie Schaufelmischer, ganz besonders bevorzugt sind Vertikalmischer. Die Unterscheidung in Horizontalmischer und Vertikalmischer erfolgt über die Lagerung der Mischwelle, d.h. Horizontalmischer haben eine horizontal gelagerte Mischwelle und Vertikalmischer haben eine vertikal gelagerte Mischwelle. Geeignete Mischer sind beispielsweise Horizontale Pflugschar® Mischer (Gebr. Lödige Maschinenbau GmbH; Paderborn; DE), Vrieco-Nauta Continuous Mixer (Hosokawa Micron BV; Doetinchem; NL), Processall Mixmill Mixer (Processall Incorporated; Cincinnati; US) und Schugi Flexomix® (Hosokawa Micron BV; Doetinchem; NL). Es ist aber auch möglich die O-berflächennachvernetzerlösung in einem Wirbelbett aufzusprühen.

Die Oberflächennachvernetzer werden typischerweise als wässrige Lösung eingesetzt. Über den Gehalt an nichtwässrigem Lösungsmittel bzw. Gesamtlösungsmittelmenge kann die Eindringtiefe des Oberflächennachvernetzers in die Polymerpartikel eingestellt werden.

Wird ausschließlich Wasser als Lösungsmittel verwendet, so wird vorteilhaft ein Tensid zugesetzt. Dadurch wird das Benetzungsverhalten verbessert und die Verklumpungsneigung vermindert. Vorzugsweise werden aber Lösungsmittelgemische eingesetzt, beispielsweise Isopropanol/Wasser, 1,3-Propandiol/Wasser und Propylenglykol/Wasser, wobei das Mischungsmassenverhältnis vorzugsweise von 20:80 bis 40:60 beträgt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Hosokawa Bepex® Horizontal Paddle Dryer (Hosokawa Micron GmbH; Leingarten; DE), Hosokawa Bepex® Disc Dryer (Hosokawa Micron GmbH; Leingarten; DE) und Nara Paddle Dryer (NARA Machinery Europe; Frechen; DE). Überdies können auch Wirbelschichttrockner eingesetzt werden.

Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Besonders vorteilhaft wird in einem Wirbelschichttrockner gemischt und getrocknet.

Bevorzugte Trocknungstemperaturen liegen im Bereich 100 bis 250°C, bevorzugt 120 bis 220°C, besonders bevorzugt 130 bis 210°C, ganz besonders bevorzugt 150 bis 200°C. Die bevorzugte Verweilzeit bei dieser Temperatur im Reaktionsmischer oder Trockner beträgt vorzugsweise mindestens 10 Minuten, besonders bevorzugt mindestens 20 Minuten, ganz besonders bevorzugt mindestens 30 Minuten, und üblicherweise höchstens 60 Minuten.

Anschließend können die oberflächennachvernetzten Polymerpartikel erneut klassiert werden, wobei zu kleine und/oder zu große Polymerpartikel abgetrennt und in das Verfahren rückgeführt werden.

Die oberflächennachvernetzten Polymerpartikel können zur weiteren Verbesserung der Eigenschaften beschichtet oder nachbefeuchtet werden.

Die Nachbefeuchtung wird vorzugsweise bei 30 bis 80°C, besonders bevorzugt bei 35 bis 70°C, ganz besonders bevorzugt bei 40 bis 60°C, durchgeführt. Bei zu niedrigen Temperaturen neigen die wasserabsorbierenden Polymerpartikel zum Verklumpen und bei höheren Temperaturen verdampft bereits merklich Wasser. Die zur Nachbefeuchtung eingesetzte Wassermenge beträgt vorzugsweise von 1 bis 10 Gew.-%, besonders bevorzugt von 2 bis 8 Gew.-%, ganz besonders bevorzugt von 3 bis 5 Gew.-%. Durch die Nachbefeuchtung wird die mechanische Stabilität der Polymerpartikel erhöht und deren Neigung zur statischen Aufladung vermindert.

Geeignete Beschichtungen zur Verbesserung der Anquellgeschwindigkeit sowie der Permeabilität (SFC) sind beispielsweise anorganische inerte Substanzen, wie wasserunlösliche Metallsalze, organische Polymere, kationische Polymere sowie zwei- oder mehrwertige Metallkationen. Geeignete Beschichtungen zur Staubbindung sind beispielsweise Polyole. Geeignete Beschichtungen gegen die unerwünschte Verbackungsneigung der Polymerpartikel sind beispielsweise pyrogene Kieselsäure, wie Aerosil® 200, und Tenside, wie Span® 20.

Das erfindungsgemäße Verfahren ermöglicht die Herstellung wasserabsorbierender Polymerpartikel mit sehr niedrigem Gehalt an Restmonomeren.

Die gemäß dem erfindungsgemäßen Verfahren erhältlichen wasserabsorbierenden Polymerpartikel weisen eine Zentrifugenretentionskapazität (CRC) von typischerweise mindestens 15 g/g, vorzugsweise mindestens 20 g/g, bevorzugt mindestens 25 g/g, besonders bevorzugt mindestens 30 g/g, ganz besonders bevorzugt mindestens 35 g/g, auf. Die Zentrifugenretentionskapazität (CRC) der wasserabsorbierenden Polymerpartikel beträgt üblicherweise weniger als 100 g/g. Die Zentrifugenretentionskapazität der wasserabsorbierenden Polymerpartikel wird gemäß der von der EDANA empfohlenen Testmethode Nr. 241.2-02 "Centrifuge retention capacity" bestimmt.

Die gemäß dem erfindungsgemäßen Verfahren erhältlichen wasserabsorbierenden Polymerpartikel weisen einen Gehalt an Restmonomeren von typischerweise weniger als 0,1 Gew.-%, vorzugsweise weniger als 0,07 Gew.-%, besonders bevorzugt weniger als 0,05 Gew.-%, ganz besonders bevorzugt von weniger als 0,04 Gew.-%, auf. Der Gehalt an Restmonomeren wird gemäß der von der EDANA empfohlenen Testmethode Nr. 210.2-02 "Residual monomers" bestimmt.

Der mittlere Durchmesser der gemäß dem erfindungsgemäßen Verfahren erhältlichen wasserabsorbierenden Polymerpartikel beträgt vorzugsweise mindestens 200 μm, besonders bevorzugt von 250 bis 600 μm, ganz besonders von 300 bis 500 μm, wobei der Partikeldurchmesser durch Lichtstreuung bestimmt werden kann und den volumengemittelten mittleren Durchmesser bedeutet. 90% der Polymerpartikel weisen einen Durchmesser von vorzugsweise 100 bis 800 μm, besonders bevorzugt von 150 bis 700 μm, ganz besonders bevorzugt von 200 bis 600 μm, auf.

Die wasserabsorbierenden Polymerpartikel werden mittels der nachfolgend beschriebenen Testmethoden geprüft.

## Methoden:

Die Messungen sollten, wenn nicht anders angegeben, bei einer Umgebungstemperatur von 23 $\pm$ 2 °C und einer relativen Luftfeuchte von 50 $\pm$ 10 % durchgeführt werden. Die wasserabsorbierenden Polymere werden vor der Messung gut durchmischt.

### Restmonomer (Residual Monomers)

Der Gehalt an Restmonomer der wasserabsorbierenden Polymerpartikel wird gemäß der von der EDANA empfohlenen Testmethode Nr. 210.2-02 "Residual monomers" bestimmt.

### Wassergehalt (Moisture Content)

Der Wassergehalt der wasserabsorbierenden Polymerpartikel wird gemäß der von der EDANA empfohlenen Testmethode Nr. 230.2-02 "Moisture content" bestimmt.

### Zentrifugenretentionskapazität (CRC)

Die Zentrifugenretentionskapazität (CRC) der wasserabsorbierenden Polymerpartikel wird gemäß der von der EDANA empfohlenen Testmethode Nr. WSP 241.2-05 "Centrifuge Retention Capacity" bestimmt:

### Absorption unter Druck (AUL0.7psi)

Die Absorption unter Druck (AUL0.7psi) der wasserabsorbierenden Polymerpartikel wird analog der von der EDANA empfohlenen Testmethode Nr. WSP 242.2-05 "Absorption under Pressure" bestimmt, wobei statt eines Drucks von 21,0 $g/cm^2$ (AUL0.3psi) ein Druck von 49,2 $g/cm^2$ (AUL0.7psi) eingestellt wird.

Die EDANA-Testmethoden sind beispielsweise erhältlich bei der EDANA, Avenue Eugene Plasky 157, B-1030 Brüssel, Belgien.

### Beispiele:

### Herstellung der wasserabsorbierenden Polymerpartikel

### Beispiel 1

25,1 kg Natriumacrylat (37,5 gew.-%ige Lösung in Wasser) und 2,9 kg Acrylsäure wurden mit 19 g 15-fach ethoxiliertem Trimethylolpropantriacrylat gemischt. Als Initiator wurde eine 15 gew.-%ige wässrige Lösung von 2,2'-Azobis[2-(2-imidazolin-2-yl)propan]dihydrochlorid und eine 15 gew.-%ige wässige Lösung von Natriumperoxodisulfat verwendet. Die Initiatoren wurden vor einem Vertropfer über einen statischen Mischer in die Monomerlösung dosiert. Die Vertropferplatte hatte 20 Bohrungen à 200 μm. Die erhaltene Mischung wurde in einen erwärmten, mit Stickstoffatmosphäre gefüllten Vertropfungsturm vertropft (12m Höhe, 2m Breite, Gasgeschwindigkeit 0,27 m/s im Gleichstrom). Die Dosiergeschwindigkeit der Monomerlösung betrug 28 kg/h. Die Dossiergeschwindigkeit der Initiatorlösungen betrug jeweils 0,23 kg/h. Die Heizleistung der Gasvorwärmung wurde so geregelt, dass die Gasausgangstemperatur im Vertropfungsturm konstant 124°C betrug.

Die wasserabsorbierenden Polymerpartikel wurden anschließend analysiert. Der Gehalt an Restmonomer betrug 4.500 ppm, der Wassergehalt 5,7 Gew.-%, die Zentrifugenretentionskapazität (CRC) 33,7 g/g und die Absorption unter Druck (AUL0.7psi) 22,7 g/g.

**Beispiel 2**

35,9 kg Natriumacrylat (37,5 gew.-%ige Lösung in Wasser) und 4,1 kg Acrylsäure wurden mit 30 g 15-fach ethoxiliertem Trimethylolpropantriacrylat gemischt. Als Initiator wurde eine 15 gew.-%ige wässrige Lösung von 2,2'-Azobis[2-(2-imidazolin-2-yl)propan]dihydrochlorid und eine 15 gew.-%ige wässige Lösung von Natriumperoxodisulfat verwendet. Die Initiatoren wurden vor einem Vertropfer über einen statischen Mischer in die Monomerlösung dosiert. Die Vertropferplatte hatte 20 Bohrungen à 180 μm. Die erhaltene Mischung wurde in einen erwärmten, mit Stickstoffatmosphäre gefüllten Vertropfungsturm vertropft (12m Höhe, 2m Breite, Gasgeschwindigkeit 0,51 m/s im Gleichstrom). Die Dosiergeschwindigkeit der Monomerlösung betrug 40 kg/h. Die Dossiergeschwindigkeit der Initiatorlösungen betrug jeweils 0,33 kg/h. Die Heizleistung der Gasvorwärmung wurde so geregelt, dass die Gasausgangstemperatur im Vertropfungsturm konstant 115°C betrug.

Die wasserabsorbierenden Polymerpartikel wurden anschließend analysiert. Der Gehalt an Restmonomer betrug 3.900 ppm, der Wassergehalt 11,1 Gew.-%, die Zentrifugenretentionskapazität (CRC) 28,2 g/g und die Absorption unter Druck (AUL0.7psi) 21,1 g/g.

**Thermische Nachbehandlung**

**Beispiel 3**

50 kg wasserabsorbierende Polymerpartikel aus Beispiel 1 wurden in einem Becker Shovel Mixer vom Typ FM 130 (Gebr. Lödige Maschinenbau GmbH; Paderborn; DE) thermisch nachbehandelt.

Dazu wurden die wasserabsorbierenden Polymerpartikel bei einer Froude-Zahl von 1,5 für 30 Minuten von unten mit einem Stickstoff/Wasserdampf-Gemisch angeströmt. Die mittlere Produkttemperatur betrug 81 °C. Das zur thermischen Nachbehandlung eingesetzte Gasvolumen betrug 0,22 Nm$^3$/h pro kg wasserabsorbierende Polymerpartikel. Die Gastemperatur betrug 90°C. Der Gasstrom enthielt 0,209 kg Wasserdampf pro kg trockenes Gas.

Die thermisch nachbehandelten Polymerpartikel wurden anschließend analysiert. Der Gehalt an Restmonomer betrug 300 ppm, der Wassergehalt 9,0 Gew.-%, die Zentrifugenretentionskapazität (CRC) 31,6 g/g und die Absorption unter Druck (AUL0.7psi) 20,6 g/g.

**Beispiel 4**

50 kg wasserabsorbierende Polymerpartikel aus Beispiel 1 wurden in einem Becker Shovel Mixer vom Typ FM 130 (Gebr. Lödige Maschinenbau GmbH; Paderborn; DE) thermisch nachbehandelt.

Dazu wurden die wasserabsorbierenden Polymerpartikel bei einer Froude-Zahl von 1,5 für 30 Minuten von unten mit einem Stickstoff/Wasserdampf-Gemisch angeströmt. Die mittlere Produkttemperatur betrug 85°C. Das zur thermischen Nachbehandlung eingesetzte Gasvolumen betrug 0,12 Nm$^3$/h pro kg wasserabsorbierende Polymerpartikel. Die Gastemperatur betrug 90°C. Der Gasstrom enthielt 0,209 kg Wasserdampf pro kg trockenes Gas.

Die thermisch nachbehandelten Polymerpartikel wurden anschließend analysiert. Der Gehalt an Restmonomer betrug 400 ppm, der Wassergehalt 13,1 Gew.-%, die Zentrifugenretentionskapazität (CRC) 29,7 g/g und die Absorption unter Druck (AUL0.7psi) 17,9 g/g.

**Beispiel 5**

50 kg wasserabsorbierende Polymerpartikel aus Beispiel 2 wurden in einem Becker Shovel Mixer vom Typ FM 130 (Gebr. Lödige Maschinenbau GmbH; Paderborn; DE) thermisch nachbehandelt.

Dazu wurden die wasserabsorbierenden Polymerpartikel bei einer Froude-Zahl von 0,4 für 45 Minuten von unten mit einem Stickstoff/Wasserdampf-Gemisch angeströmt. Die mittlere Produkttemperatur betrug 88°C. Das zur thermischen Nachbehandlung eingesetzte Gasvolumen betrug 0,47 Nm$^3$/h pro kg wasserabsorbierende Polymerpartikel. Die Gastemperatur betrug 90°C. Der Gasstrom enthielt 0,209 kg Wasserdampf pro kg trockenes Gas.

Die thermisch nachbehandelten Polymerpartikel wurden anschließend analysiert. Der Gehalt an Restmonomer betrug 230 ppm und der Wassergehalt 10 Gew.-%.

**Beispiel 6**

50 kg wasserabsorbierende Polymerpartikel aus Beispiel 2 wurden in einem Becker Shovel Mixer vom Typ FM 130 (Gebr. Lödige Maschinenbau GmbH; Paderborn; DE) thermisch nachbehandelt.

Dazu wurden die wasserabsorbierenden Polymerpartikel bei einer Froude-Zahl von 0,4 für 45 Minuten von unten mit einem Stickstoff/Wasserdampf-Gemisch angeströmt. Die mittlere Produkttemperatur betrug 88°C. Das zur thermischen Nachbehandlung eingesetzte Gasvolumen betrug 0,22 Nm$^3$/h pro kg wasserabsorbierende Polymerpartikel. Die Gastemperatur betrug 90°C. Der Gasstrom enthielt 0,120 kg Wasserdampf pro kg trockenes Gas.

Die thermisch nachbehandelten Polymerpartikel wurden anschließend analysiert. Der Gehalt an Restmonomer betrug 330 ppm und der Wassergehalt 10 Gew.-%.

## Patentansprüche

1. Verfahren zur Entfernung von Restmonomeren aus wasserabsorbierenden Polymerpartikeln, **dadurch gekennzeichnet, dass** die wasserabsorbierenden Polymerpartikel in einem Mischer mit rotierenden Mischwerkzeugen in Gegenwart eines Gasstromes thermisch nachbehandelt werden, das anströmende Gas bereits Wasserdampf enthält, die mittlere Verweilzeit im Mischer von 10 bis 120 Minuten beträgt, die wasserabsorbierenden Polymerpartikel während der thermischen Nachbehandlung eine Temperatur von mindestens 60°C und einen Wassergehalt von mindestens 3 Gew.-% aufweisen und der Gasstrom 0,01 bis 1 kg Wasserdampf pro kg trockenes Gas enthält.

2. Verfahren gemäß Anspruch 1, **dadurch gekennzeichnet, dass** die wasserabsorbierenden Polymerpartikel während der thermischen Nachbehandlung eine Temperatur von 80 bis 110°C aufweisen.

3. Verfahren gemäß Anspruch 1 oder 2, **dadurch gekennzeichnet, dass** der Gasstrom von 0,1 bis 0,25 kg Wasserdampf pro kg trockenes Gas enthält.

4. Verfahren gemäß einem der Ansprüche 1 bis 3, **dadurch gekennzeichnet, dass** das zur thermischen Nachbehandlung verwendete Gasvolumen in einem diskontinuierlichen Mischer von 0,01 bis 5 Nm$^3$/h pro kg wasserabsorbierende Polymerpartikel oder in einem kontinuierlichen Mischer von 0,01 bis 5 Nm$^3$/h pro kg/h durchgesetzter wasserabsorbierender Polymerpartikel beträgt.

5. Verfahren gemäß einem der Ansprüche 1 bis 4, **dadurch gekennzeichnet, dass** die thermische Nachbehandlung in einem Horizontalmischer durchgeführt wird.

6. Verfahren gemäß einem der Ansprüche 1 bis 5, **dadurch gekennzeichnet, dass** die wasserabsorbierenden Polymerpartikel durch Polymerisation einer Monomerlösung, enthaltend

    a) mindestens ein ethylenisch ungesättigtes, säuregruppentragendes Monomer, das zumindest teilweise neutralisiert sein kann,
    b) mindestens einen Vernetzer,
    c) mindestens einen Initiator
    d) optional ein oder mehrere mit den unter a) genannten Monomeren copolymerisierbare ethylenisch ungesättigte Monomere,
    e) optional ein oder mehrere wasserlösliche Polymere und
    f) Wasser,

erhalten werden.

7. Verfahren gemäß einem der Ansprüche 1 bis 6, **dadurch gekennzeichnet, dass** das Monomer a) zu mindestens 25 mol-% neutralisiert ist.

8. Verfahren gemäß einem der Ansprüche 1 bis 7, **dadurch gekennzeichnet, dass** das Monomer a) zu mindestens 50 mol-% Acrylsäure ist.

9. Verfahren gemäß einem der Ansprüche 1 bis 8, **dadurch gekennzeichnet, dass** die Monomerlösung mindestens 0,1 Gew.-% Vernetzer b), bezogen auf unneutralisiertes Monomer a) enthält.

## Claims

1. A process for removing residual monomers from water-absorbing polymer particles, wherein the water-absorbing polymer particles are thermally after treated in a mixer with rotating mixing tools in the presence of a gas stream, the incoming gas already comprises water vapor, the mean residence time in the mixer is from 10 to 120 minutes, said water-absorbing polymer particles have a temperature of at least 60°C and a moisture content of at least 3% by weight during the thermal aftertreatment, and said gas stream comprises 0.01 to 1 kg of water vapor per kg of dry gas.

2. The process according to claim 1, wherein the water-absorbing polymer particles have a temperature of 80 to 110°C during the thermal aftertreatment.

3. The process according to claim 1 or 2, wherein the gas stream comprises from 0.1 to 0.25 kg of water vapor per kg of dry gas.

4. The process according to any of claims 1 to 3, wherein the gas volume used for thermal aftertreatment in a batchwise mixer is from 0.01 to 5 m$^3$ (STP)/h per kg of water-absorbing polymer particles, or, in a continuous mixer, from 0.01 to 5 m$^3$ (STP)/h per kg/h of water-absorbing polymer particle throughput.

5. The process according to any of claims 1 to 4, wherein the thermal aftertreatment is performed in a horizontal mixer.

6. The process according to any of claims 1 to 5, wherein the water-absorbing polymer particles are obtained by polymerizing a monomer solution comprising:

   a) at least one ethylenically unsaturated monomer which bears acid groups and may be at least partly neutralized,
   b) at least one crosslinker,
   c) at least one initiator,
   d) optionally one or more ethylenically unsaturated monomers copolymerizable with the monomers mentioned under a),
   e) optionally one or more water-soluble polymers and
   f) water.

7. The process according to any of claims 1 to 6, wherein the monomer a) has been neutralized to an extent of at least 25 mol%.

8. The process according to any of claims 1 to 7, wherein the monomer a) is acrylic acid neutralized to an extent of at least 50 mol%.

9. The process according to any of claims 1 to 8, wherein the monomer solution comprises at least 0.1% by weight of crosslinker b), based on unneutralized monomer a).

## Revendications

1. Procédé pour éliminer des monomères résiduels de particules polymères absorbant l'eau, **caractérisé en ce que** les particules polymères absorbant l'eau sont post-traitées thermiquement dans un mélangeur avec des outils de mélange rotatifs en présence d'un flux gazeux, le gaz affluant contient déjà de la vapeur d'eau, le temps de séjour moyen dans le mélangeur est de 10 à 120 minutes, les particules polymères absorbant l'eau présentent, pendant le post-traitement thermique, une température d'au moins 60°C et une teneur en eau d'au moins 3% en poids et le flux gazeux contient 0,01 à 1 kg de vapeur d'eau par kg de gaz sec.

2. Procédé selon la revendication 1, **caractérisé en ce que** les particules polymères absorbant l'eau présentent, pendant le post-traitement thermique, une température de 80 à 110°C.

3. Procédé selon la revendication 1 ou 2, **caractérisé en ce que** le flux gazeux contient 0,1 à 0,25 kg de vapeur d'eau par kg de gaz sec.

4. Procédé selon l'une quelconque des revendications 1 à 3, **caractérisé en ce que** le volume de gaz utilisé pour le post-traitement thermique, dans un mélangeur discontinu, est de 0,01 à 5 Nm$^3$/h par kg de particules polymères absorbant l'eau ou, dans un mélangeur continu, de 0,01 à 5 Nm$^3$/h par kg/h de particules polymères absorbant l'eau qui passent.

5. Procédé selon l'une quelconque des revendications 1 à 4, **caractérisé en ce que** le post-traitement thermique est réalisé dans un mélangeur horizontal.

6. Procédé selon l'une quelconque des revendications 1 à 5, **caractérisé en ce que** les particules polymères absorbant l'eau sont obtenues par polymérisation d'une solution de monomères, contenant

   a) au moins un monomère éthyléniquement insaturé, portant des groupes acides, qui peut être au moins partiellement neutralisé,
   b) au moins un réticulant,
   c) au moins un initiateur,
   d) éventuellement un ou plusieurs monomères éthyléniquement insaturés copolymérisables avec les monomères cités en a),
   e) éventuellement un ou plusieurs polymères solubles dans l'eau et
   f) de l'eau.

7. Procédé selon l'une quelconque des revendications 1 à 6, **caractérisé en ce que** le monomère a) est neutralisé à raison d'au moins 25% en mole.

8. Procédé selon l'une quelconque des revendications 1 à 7, **caractérisé en ce que** le monomère a) est, à raison d'au moins 50% en mole, de l'acide acrylique.

9. Procédé selon l'une quelconque des revendications 1 à 8, **caractérisé en ce que** la solution de monomères contient au moins 0,1% en poids de réticulant b), par rapport au monomère a) non neutralisé.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0348180 A1
- EP 0816383 A1
- WO 9640427 A1
- US 4020256 A
- US 20020193546 A
- DE 3519013 A1
- WO 2008095901 A1
- WO 2002055469 A1
- WO 2003078378 A1
- WO 2004035514 A1
- EP 0530438 A1
- EP 0547847 A1
- EP 0559476 A1
- EP 0632068 A1
- WO 9321237 A1
- WO 2003104299 A1
- WO 2003104300 A1
- WO 2003104301 A1
- DE 10331450 A1
- DE 10331456 A1
- DE 10355401 A1
- DE 19543368 A1
- DE 19646484 A1
- WO 9015830 A1
- WO 2002032962 A2
- WO 2001038402 A1
- DE 3825366 A1
- US 6241928 B
- WO 2008040715 A2
- WO 2008052971 A1
- US 3243321 A
- EP 0083022 A2
- EP 0543303 A1
- EP 0937736 A2
- DE 3314019 A1
- DE 3523617 A1
- EP 0450922 A2
- DE 10204938 A1
- US 6239230 B
- DE 4020780 C1
- DE 19807502 A1
- DE 19807992 C1
- DE 19854573 A1
- DE 19854574 A1
- DE 10204937 A1
- DE 10334584 A1
- EP 1199327 A2
- WO 2003031482 A1
- DE 3713601 A1

**In der Beschreibung aufgeführte Nicht-Patentliteratur**

- **F.L. BUCHHOLZ ; A.T. GRAHAM.** Modern Super-absorbent Polymer Technology. Wiley-VCH, 1998, 71-103